# EUROPEAN PATENT APPLICATION

(11) **EP 3 196 508 A1**
(43) Date of publication of application: **26.07.2017**
(21) Application number: 15842332.7
(22) Date of filing: 15.09.2015
(51) Int. Cl.: F16H 13/04

(54) **POWER TRANSMISSION ROLLER**

(30) Priority: 18.09.2014 JP 2014189654
(71) Applicant: NTN Corporation, Osaka-shi, Osaka 550-0003 (JP)
(72) Inventor: IZUTSU Tomoyoshi, Iwata-shi Shizuoka 438-8510 (JP)
(74) Representative: Grünecker Patent- und Rechtsanwälte PartG mbB
(86) International application number: PCT/JP2015/076108
(87) International publication number: WO 2016/043178

(57) **Abstract**

In order to stably transmit power between a driving roller (D) and a driven roller (S) of a power transmission mechanism due to friction therebetween, and to reduce the size of the power transmission mechanism, a power transmission roller assembly is provided which includes a roller body (2) to be brought into abutment with the driving roller (D) and the driven roller (S); a pivot shaft (3) fixed to a vehicle body; a pivot arm (4) provided radially inside of the roller body (2), and pivotally mounted on the pivot shaft (3); a roller support bearing (5) rotatably supporting the roller body (2); and a pair of biasing members (6) provided on the pivot arm (4), and biasing the roller support bearing (5) to a predetermined position between the driving and driven rollers (D and S) where the abutment forces between the roller body (2) and the driving and driven rollers (D and S) balance with each other.

## Description

### TECHNICAL FIELD

This invention relates to a power transmission roller assembly disposed between a driving roller and a driven roller to transmit torque of the driving roller to the driven roller by frictional force.

### BACKGROUND ART

A conventional power transmission mechanism for an engine includes an engine accessory belt trained around the crankshaft of the engine, engine accessories such as a water pump (WP) and an idling stop generator (ISG), and an idler pulley, to transmit power between the crankshaft and the engine accessories. In this arrangement, the engine accessories always rotate while the crankshaft is rotating. This means that the water pump is rotated when it is not necessary to rotate it such as while the engine is being rotated for warm-up. This unnecessarily wears the accessory belt, and also increases fuel consumption because, for example, the water pump is unnecessarily rotated.

In order to solve this problem, as shown in Fig. 1 of Patent document 1, it is known to use, instead of the accessory belt, an idler roller (friction wheel 17) for power transmission disposed between a driving roller (crankshaft pulley 4) and a driven roller (friction pulley 14) to transmit torque of the driving roller to the idler roller due to the frictional force between the idler roller and the driving and driven rollers. Unlike the engine accessory belt, the idler roller is capable of selectively and freely bringing the driving roller and the driven roller into contact with and out of contact with each other, via the idler roller, by moving back and forth.

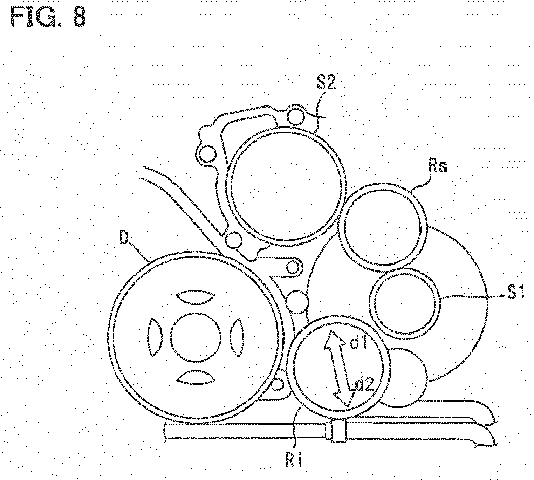

Fig. 8 shows an arrangement including a driving roller D (such as a crankshaft roller), a driven roller S1 (such as an idling stop generator roller), an idler rollers Ri, and other rollers S2 and Rs. In this arrangement, when the idler roller Ri is moved in the direction of the arrow d1, the idler roller Ri abuts the driving roller D and the driven roller S1, so that power can be transmitted from the driving roller D to the driven roller S1. When the idler roller Ri is moved in the direction of the arrow d2, the idler roller Ri is separated from the driving roller D and the driven roller S1, so that power cannot be transmitted between the rollers D and S1.

The below-identified Patent document 2 discloses a mechanism (cam actuator) configured to bring an idler roller as shown above into abutment, uniformly, with the driving roller and the driven roller. As shown in Fig. 1 of Patent document 2, this cam actuator includes a planetary speed reducer R for reducing the rotation of a motor 1, and an eccentric cam 3 for converting the thus reduced rotation of the motor to a reciprocating motion of a coupling rod 201, thereby moving, back and forth, a pulley 300 supported at the end of the coupling rod 201. By moving the pulley 300 back and forth according to the operating conditions of the engine, it is possible to selectively transmit, and prohibit transmission of, power from the driving roller to the driven roller in a controlled manner, thereby improving fuel economy.

The coupling rod 201 is configured to be slightly pivotable from the axial direction at its intermediate portion such that when the pulley 300 abuts the driving roller and the driven roller, the coupling rod 201 pivots such that the pulley 300 abuts the respective rollers with substantially equal abutment forces, thereby positioning the pulley 300 at the optimum position.

### PRIOR ART DOCUMENTS

### PATENT DOCUMENTS

Patent document 1: JP Patent 4891914B
Patent document 2: JP Patent 4809341B

### SUMMARY OF THE INVENTION

### OBJECT OF THE INVENTION

The cam actuator disclosed in Patent document 2 is configured to grip the rotary shaft of the pulley 300 (idler roller) and pivot the rotary shaft about a point located outside of the pulley 300 (substantially at the longitudinal center of the coupling rod 201). This necessities an extra space around the pulley 300 in which the pulley 300 can pivot. Such an extra space makes it difficult to minimize the size of the power transmission mechanism, and restricts the freedom of layout of the power transmission mechanism. Since the pulley 300 is positioned by pivoting the single coupling rod 201, the coupling rod 201 could be twisted about its axis. This could in turn cause the pulley 300 to be brought into abutment with the driving roller and the driven roller in an undesirable manner such that power cannot be transmitted stably due to friction.

An object of the present invention is to stably transmit power between the driving roller and the driven roller of a power transmission mechanism due to friction therebetween, and reduce the size of the power transmission mechanism.

### MEANS FOR ACHIEVING THE OBJECT

In order to achieve this object, the present invention provides a power transmission roller assembly disposed between a driving roller and a driven roller such that torque of the driving roller can be transmitted to the driven roller due to frictional force, the power transmission roller assembly comprising:
a roller body configured to be brought into contact with the driving roller and the driven roller;
a pivot shaft fixed to a vehicle body;
a pivot arm provided radially inside of the roller body, and pivotally mounted on the pivot shaft;
a roller support bearing rotatably supporting the roller body; and
a pair of biasing members provided on the pivot arm, and biasing the roller support bearing to a predetermined position between the driving roller and the driven roller where an abutment force between the roller body and the driving roller balances with an abutment force between the roller body and the driven roller.

With this arrangement, when at least one of the driving roller and the driven roller abuts the roller body of the power transmission roller assembly, the abutment force therebetween causes the pair of biasing members to be compressed or expanded independently of each other, thus pivoting the pivot arm about the pivot shaft to a position corresponding to the positions of the driving and driven rollers where the abutment forces between the driving roller and the roller body and the driven roller and the roller body are substantially equal to each other. This allows stable transmission of power from the driving roller to the driven roller.

Since the pivot arm is arranged radially inside of the roller body, the pivot shaft, which pivots the pivot arm, and the roller support bearing are also arranged radially inside of the roller body. This makes it possible to minimize the size of the entire power transmission roller assembly including the pivot mechanism. By using two biasing members, the biasing members are less likely to be twisted when biased, so that the roller body of the power transmission roller assembly can be reliably brought into abutment with the driving roller and the driven roller, which in turn makes it possible to stably transmit power between the roller body of the power transmission roller assembly and the driving and driven rollers due to friction therebetween. Further, since the roller support bearing can be provided between the two biasing members, the roller support bearing can rotate in a stable manner.

Preferably, the outer race of the roller support bearing carries the biasing members, and the roller body and the inner race of the roller support bearing are configured to rotate together with each other.

Since the outer race of the roller support bearing is provided radially outside of its inner race, when the outer race and the inner race are rotated at the same speed, the peripheral speed of the outer race is higher than that of the inner race. Thus, by configuring the roller support bearing such that the outer race is fixed in position, and the inner race is rotatable relative to the outer race, the load on the bearing is smaller than when the bearing is configured the other way around. Thus, by configuring the power transmission roller assembly such that the biasing members, which do not rotate, are carried by the outer race of the roller support bearing, and the inner race of the roller support bearing rotates together with the roller body, it is possible to reduce the load on the roller support bearing, and thus extend its life.

Preferably, the roller support bearing and the biasing members are disposed in a plane passing through the center of the friction surface of the roller body in the width direction of the friction surface.

This arrangement prevents a moment due to a biasing force generated when the roller support bearing is biased by the biasing members, and thus prevents inclination of the roller body due to such a moment. This makes it possible to reliably bring the roller body of the power transmission roller assembly into abutment with the driving roller and the driven roller, which in turn allows power to be reliably transmitted between the roller body of the power transmission roller assembly and the driving and driven rollers due to friction therebetween. Also, the roller body will not become worn due to improper abutment with the driving and driven rollers.

Preferably, the power transmission roller assembly is provided on a cover covering the driving roller and the driven roller such that when the cover is fitted in a predetermined position, the power transmission roller assembly is disposed at predetermined position between the driving roller and the driven roller.

By providing the power transmission roller assembly on a cover covering the driving roller and a driven roller, the power transmission roller assembly can be easily and smoothly mounted at a predetermined position.

Preferably, the power transmission roller assembly further comprises an eccentric cam provided in the vicinity of the roller support bearing, and configured to come into abutment with one of the roller support bearing and a member integral with the roller support bearing by rotating about an eccentric rotary shaft, thereby moving the roller body out of contact with at least one of the driving roller and the driven roller.

By using the eccentric cam, the roller body of the power transmission roller assembly can be easily selectively brought into, and moved out of, contact with either or both of the driving roller and the driven roller.

### ADVANTAGES OF THE INVENTION

As described above, the power transmission roller assembly according to the present invention comprises a roller body configured to be brought into contact with the driving roller and the driven roller; a pivot shaft fixed to a vehicle body; a pivot arm provided radially inside of the roller body, and pivotally mounted on the pivot shaft; a roller support bearing rotatably supporting the roller body; and a pair of biasing members provided on the pivot arm, and biasing the roller support bearing to a predetermined position between the driving roller and the driven roller where an abutment force between the roller body and the driving roller balances with an abutment force between the roller body and the driven roller.

This power transmission roller assembly is configured such that by the pivoting motion of the pivot arm about the pivot shaft, the power transmission roller assembly is roughly positioned relative to the driving roller and the driven roller, and then, the pair of biasing members are expanded or contracted independently of each other according to the abutment forces between the driving roller and the roller body of the power transmission roller assembly and between the driven roller and the roller body until the abutment forces becomes substantially equal to each other. Thus, the power transmission roller assembly can be positioned easily and smoothly.

By arranging the pivot arm radially inside of the roller body, the pivot shaft, which pivots the pivot arm, and the roller support bearing are also arranged radially inside of the roller body. This reduces the size of the entire power transmission roller assembly, including the pivot mechanism. Since two biasing members are used, the biasing members are less likely to be twisted while being biased, so that the roller body of the power transmission roller assembly can be reliably brought into abutment with the driving roller and the driven roller. This in turn makes it possible to stably transmit power between the driving roller and the driven roller due to friction between the roller body and the driving and driven rollers. Since, with this arrangement, the roller support bearing can be disposed between the two biasing members, the roller support bearing can rotate stably.

### BRIEF DESCRIPTION OF THE DRAWINGS

Fig. 1A is a front view of a power transmission roller assembly embodying the present invention.
Fig. 1B is a sectional view taken along line b-b of Fig. 1A.
Fig. 2A is a side view of the power transmission roller assembly shown in Fig. 1A.
Fig. 2B is a back view of the power transmission roller assembly shown in Fig. 1A.
Fig. 3 is a sectional view taken along line III-III of Fig. 1B.
Fig. 4 is a perspective view of the power transmission roller assembly shown in Fig. 1A.
Fig. 5 is an exploded perspective view of the power transmission roller assembly shown in Fig. 1A.
Fig. 6 is a plan view of the power transmission roller assembly shown in Fig. 1A, showing one operational state thereof.
Fig. 7A is a plan view of the power transmission roller assembly of Fig. 1A, showing an eccentric cam mechanism (while power is being transmitted).
Fig. 7B is a plan view of the power transmission roller assembly of Fig. 1A, showing the eccentric cam mechanism (while power is not being transmitted).
Fig. 8 is a plan view showing an arrangement of rollers.

### BEST MODE FOR EMBODYING THE INVENTION

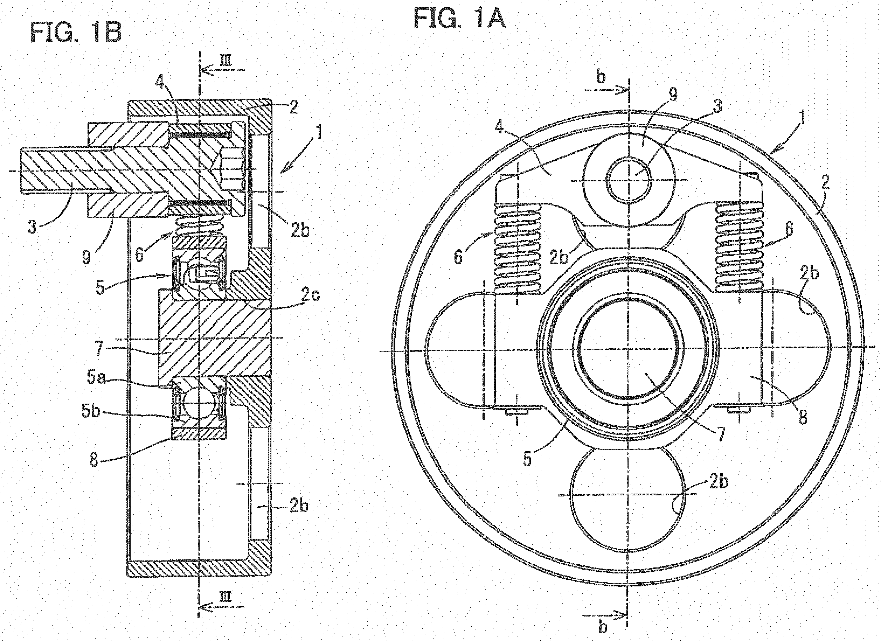

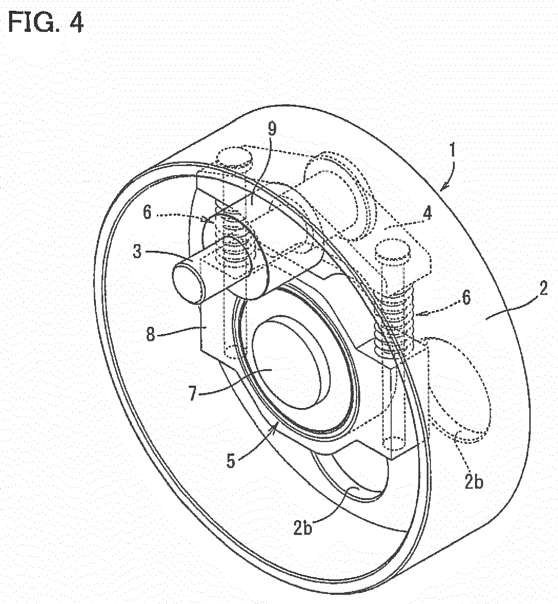

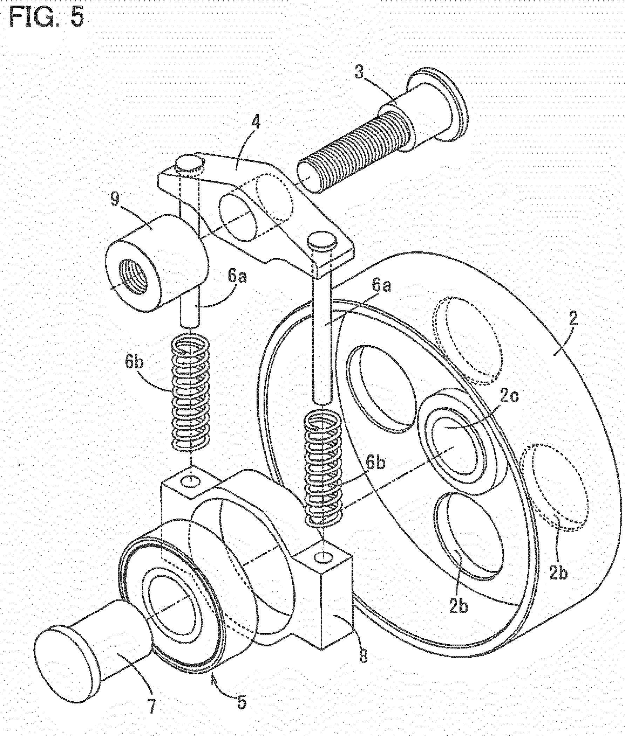

Figs. 1A to 5 show a power transmission roller assembly 1 embodying the present invention. The power transmission roller assembly 1 is disposed between a driving roller D mounted e.g., to a crankshaft and a driven roller S for actuating an engine accessory such as a water pump (WP) or an idling stop generator (ISG) to transmit torque of the driving roller D to the driven roller S. The power transmission roller assembly 1 includes, as main elements, a roller body 2, a pivot shaft 3, a pivot arm 4, a roller support bearing 5, and a pair of biasing members 6. The driving roller D and the driven roller S may be used as a driven roller and a driving roller, respectively, when, for example, driving the crankshaft with the idling stop generator (ISG).

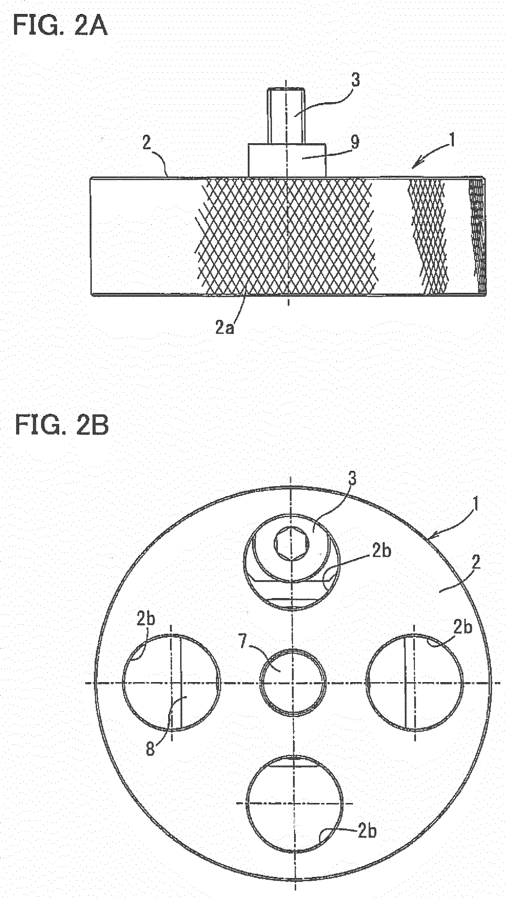

The roller body 2 is a cylindrical member having a bottom and in direct contact with the driving roller D and the driven roller S. For increased frictional force between the roller body 2 and the driving roller D and between the roller body 2 and the driven roller S, the surface 2a of the roller body 2 that is brought into contact with the driving roller D and the driven roller S are knurled (see Fig. 2A). For reduced weight of the roller body 2, a plurality of holes 2b are formed in the bottom of the roller body 2. The roller body 2 is formed with a bearing hole 2c extending along the rotation center axis of the roller body 2e. As shown in Fig. 1B, a bearing retaining member 7 is inserted through the inner race 5a of the roller support bearing 5 (which is, in the embodiment, a ball bearing) and the bearing hole 2c such that, with the radially inner portion of the roller body 2 in juxtaposition with the inner race 5a, the roller body 2 and the outer race 5b of the roller support bearing 5 are rotatable relative to each other. With this arrangement, since the roller body 2 is rotated together with the inner race 5a, less loads act on the roller support bearing 5, which extends the life of the roller support bearing 5.

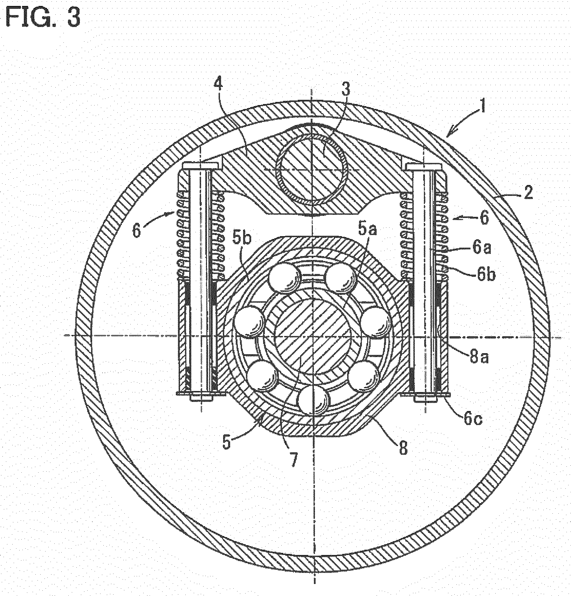

A support member 8 is fitted on the outer race 5b of the roller support bearing 5. The support member 8 is formed with two through holes 8a which are symmetrical to each other with respect to the roller support bearing 5. A shaft 6a of one of the biasing members 6 is inserted in each through hole 8a with the head (upper end in Fig. 3) of the shaft 6a fixed to the pivot arm 4, which is to be pivoted by the pivot shaft 3. The distal end portion (lower end portion in Fig. 3) of the shaft 6a can protrude further from the through hole 8a from the position shown in Fig. 3, while being prevented from retracting into the through hole 8a by a washer 6c.

The biasing members 6 each include a coil spring 6b coaxial with the shaft 6a, and are configured such that when at least one of the driving roller D and the driven roller S abuts the lower half portion of the roller body 2, shown in Fig. 1A, the two coil springs 6b are compressed. The biasing members 6 are further configured such that the coil springs 6b are compressed and expanded independently of each other according to the abutment forces applied to the roller body 2 from the driving roller D and the driven roller S, respectively, such that pivot arm 4 pivots about the pivot shaft 3.

Since the power transmission roller assembly 1 includes two biasing members 6, the biasing members 6 are less likely to be twisted when biased, so that the roller body 2 of the power transmission roller assembly 1 can be reliably brought into abutment with the driving roller D and the driven roller S, which in turn makes it possible to stably transmit power between the roller body 2 of the power transmission roller assembly 1 and the driving and driven rollers D and S due to friction therebetween. Further, since the roller support bearing 5 can be provided between the two biasing members 6, the roller support bearing 5 can rotate in a stable manner.

In this embodiment, the roller support bearing 5 and the biasing members 8 are in the plane passing through the center of the friction surface (knurled surface 2a) of the roller body 2 in the width direction thereof. This arrangement prevents a moment due to a biasing force generated when the roller support bearing 5 is biased by the biasing members 6, and thus prevents inclination of the roller body 2 due to such a moment. This makes it possible to reliably bring the roller body 2 of the power transmission roller assembly 1 into abutment with the driving roller D and the driven roller S, which in turn allows power to be reliably transmitted between the roller body 2 of the roller assembly 1 and the driving and driven rollers D and S due to friction therebetween. Also, the roller body 2 will not become worn due to improper abutment with the rollers D and S.

Since the pivot shaft 3, pivot arm 4, roller support bearing 5, and biasing members 6 are all disposed radially inside of the (cylindrical) roller body 2, the power transmission mechanism including the power transmission roller assembly 1 can be reduced in size. The power transmission roller assembly 1 is disposed at a predetermined position between the driving roller D and the driven roller S by fixing the pivot shaft 3, through a spacer 9, to a cover (not shown) covering the driving roller D and the driven roller S, and by fitting the cover in a predetermined position. By providing the power transmission roller assembly 1 with a mechanism capable of selectively compressing, or not compressing, the biasing members 6, it is possible to fit the cover in position such that the roller body 2 of the power transmission roller assembly 1 does not contact the driving roller D and the driven roller S, and thus to easily and smoothly mount the power transmission roller assembly 1 in position.

If a mounting space is available on the side of the engine block, the power transmission roller assembly 1 may be mounted to the engine block, instead of mounting it to the cover as described above.

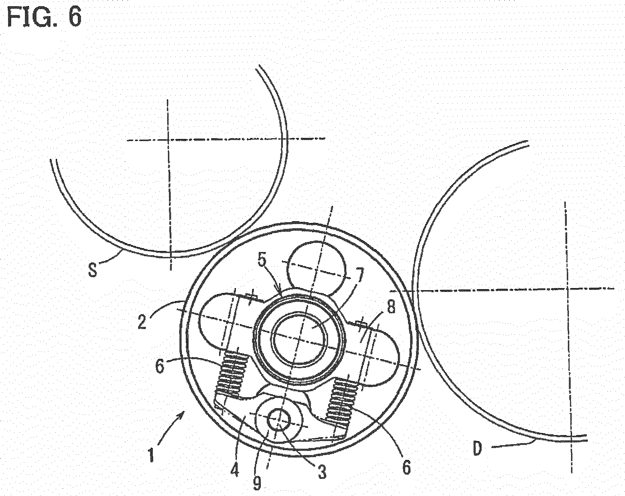

As described above, when at least one of the driving roller D and the driven roller S abuts the roller body 2 of the power transmission roller assembly 1, the coil springs 6b of the pair of biasing members 6 are compressed and expanded independently of each other according to the abutment forces applied to the roller body 2 from the driving roller D and the driven roller S, respectively, such that pivot arm 4 pivots about the pivot shaft 3. When the pivot arm 4 pivots about the pivot shaft 3, the pivot arm 4 is displaced to a position corresponding to the positions of the respective rollers D and S (this position of the pivot arm is shown by the solid line in Fig. 6), i.e., to a position where the abutment force between the driving roller D and the roller body 2 of the power transmission roller assembly 1 is substantially equal to the abutment force between the driven roller S and the roller body 2 of the power transmission roller assembly 1. The pivot arm 4 is kept in this position, so that power can be transmitted from the driving roller D to the driven roller S in a stable manner.

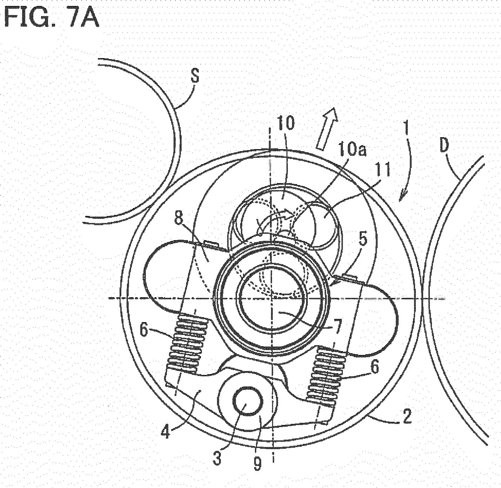

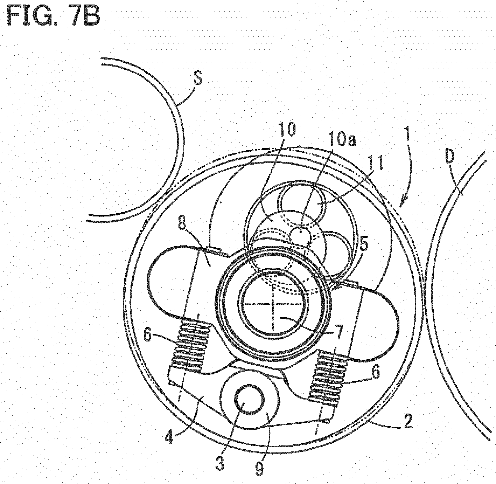

As shown in Figs. 7A and 7B, in the vicinity of the roller support bearing 5 of the power transmission roller assembly 1, an eccentric cam 10 is pivotally mounted on an eccentric shaft 10a so as to be capable of abutting the roller support bearing 5. The eccentric shaft 10a is connected to a motor (not shown) through via a reduction mechanism 11 such as a planetary gear mechanism. While the eccentric cam 10 is not in abutment with the roller support bearing 5 (see Fig. 7A), the roller body 2 of the power transmission roller assembly 1 is in abutment with the driving roller D and the driven roller S, so that power is transmitted from the driving roller D to the driven roller S. When the eccentric cam 10 is brought into abutment with the roller support bearing 5, and the roller support bearing 5 is pushed by the eccentric cam 10 against the biasing force of the biasing members 6 of the power transmission roller assembly 1 (thereby compressing the coil springs 6b of biasing members 6), the roller body 2 of the power transmission roller assembly 1 separates from both the driving roller D and the driven roller S (as shown in Fig. 7B), so that power is now not transmitted from the driving roller D to the driven roller S.

The eccentric cam 10 allows smooth and easy switching between the states in which power can, and cannot, be transmitted between the driving roller D and the driven roller S. Instead of the eccentric cam 10, an actuator may be used which is capable of pushing the roller support bearing 5 to achieve the same results as with the eccentric cam 10. The eccentric cam 10 may not necessarily be configured to directly push the roller support bearing 5, but may be configured to push the bearing 5 via a presser member (not shown).

The power transmission roller assembly 1 of the embodiment is a mere example, and the roller assembly 1 may be modified such that an element or elements of the roller assembly 1 are shaped and/or arranged differently, or an element or elements are added thereto, provided such a modified roller assembly 1 achieve the object of the present invention, i.e., the object of stably transmitting power between the driving roller D and the driven roller S due to friction between the roller body and the driving and driven rollers, while reducing the size of the power transmission mechanism.

### DESCRIPTION OF THE NUMERALS

- 1.: Power transmission roller assembly
- 2.: Roller body
- 2a.: Knurled surface
- 2b.: Hole
- 2c.: Bearing hole
- 3.: Pivot shaft
- 4.: Pivot arm
- 5.: Roller support bearing
- 5a.: Inner race
- 5b.: Outer race
- 6.: Biasing member
- 6a.: Shaft
- 6b.: Coil spring
- 6c.: Washer
- 7.: Bearing retaining member
- 8.: Support member
- 9.: Spacer
- 10.: Eccentric cam
- 10a.: Eccentric shaft
- 11.: Reduction mechanism
- D.: Driving roller
- S.: Driven roller

## Claims

1. A power transmission roller assembly disposed between a driving roller (D) and a driven roller (S) such that torque of the driving roller (D) can be transmitted to the driven roller (S) due to frictional force, the power transmission roller assembly comprising:
a roller body (2) configured to be brought into contact with the driving roller (D) and the driven roller (S);
a pivot shaft (3) fixed to a vehicle body;
a pivot arm (4) provided radially inside of the roller body (2), and pivotally mounted on the pivot shaft (3);
a roller support bearing (5) rotatably supporting the roller body (2); and
a pair of biasing members (6) provided on the pivot arm (4), and biasing the roller support bearing (5) to a predetermined position between the driving roller (D) and the driven roller (S) where an abutment force between the roller body (2) and the driving roller (D) balances with an abutment force between the roller body (2) and the driven roller (S).

2. The power transmission roller assembly of claim 1, wherein the roller support bearing (5) includes an inner race (5a) and an outer race (5b), the outer race (5b) of the roller support bearing (5) carries the biasing members (6), and the roller body (2) and the inner race (5a) of the roller support bearing (5) are configured to rotate together with each other.

3. The power transmission roller assembly of claim 1 or 2, wherein the roller body (2) has a friction surface configured to be brought into frictional contact with the driving roller (D) and the driven roller (S), and the roller support bearing (5) and the biasing members (6) are in a plane passing through a center of the friction surface in a width direction of the friction surface.

4. The power transmission roller assembly of any of claims 1 to 3, wherein the power transmission roller assembly is provided on a cover covering the driving roller (D) and the driven roller (S) such that when the cover is fitted in a predetermined position, the power transmission roller assembly is disposed at predetermined position between the driving roller (D) and the driven roller (S).

5. The power transmission roller assembly of any of claims 1 to 4, further comprising an eccentric cam (10) provided in a vicinity of the roller support bearing (5), and configured to come into abutment with one of the roller support bearing (5) and a member integral with the roller support bearing (5) by rotating about an eccentric rotary shaft, thereby moving the roller body (2) out of contact with at least one of the driving roller (D) and the driven roller (S).
